# EUROPÄISCHE PATENTANMELDUNG

(11) **EP 1 498 463 A1**
(43) Veröffentlichungstag der Anmeldung: **19.01.2005**
(21) Anmeldenummer: 03016186.3
(22) Anmeldetag: 17.07.2003
(51) Int. Cl.: C09K 3/10

(54) **Intumeszierende Dichtung für den vorbeugenden Brandschutz**

(71) Anmelder: Gluske GmbH, 50169 Kerpen-Türnich (DE)
(72) Erfinder: Ma, Senyuan, Dr., 50226 Frechen (DE); Lutzner, Lothar, 51143 Köln (DE)
(74) Vertreter: Sternagel, Fleischer, Godemeyer & Partner

(57) **Zusammenfassung**

Die vorliegende Erfindung betrifft eine intumeszierende Dichtung enthaltend mindestens ein Ethylen-Vinylacetat-Copolymer mit einem Vinylacetat-Anteil von 6 bis 40 Gew.-%, mindestens ein phosphorhaltiges Flammschutzmittel und Blähgraphit, sowie ein Verfahren zu ihrer Herstellung.

## Beschreibung

Die Erfindung betrifft eine intumeszierende Dichtung für den vorbeugenden Brandschutz, sowie ein Verfahren zu ihrer Herstellung.

Für den sogenannten vorbeugenden Brandschutz werden heute intumeszierende Materialien verwendet. Intumeszierende Materialien beginnen sich im Brandfall ab einer bestimmten Temperatur auszudehnen. Diese Materialien werden insbesondere für erhöhte Brandschutzansprüche überall dort eingesetzt, wo die Gefahr besteht, dass Feuer und/oder der durch einen Brand entstehende Rauch aus dem Brandraum austritt und sich ein Feuer so weiter verbreitet.

Besonders kritische Stellen, durch die sich Feuer und/oder Rauch verbreiten können, sind z. B. die Anschlussstellen der Massivbauelemente wie Fugen zwischen Wänden und/oder Decken, Spalten, Zwischenräume an Fensterrahmen und -flügeln, Türrahmen oder Türblättern, Glasfalzräume in Verglasungen, Wand- bzw. Deckendurchbrüche für Versorgungsrohre und -kanäle für elektrische Kabel.

Um eine bestimmte Brandschutzklassifizierung für die in einem Bauwerk angebrachten Baueinheiten zu erzielen, setzt man an solchen kritischen Stellen die sogenannten intumeszierenden Materialien ein.

Intumeszierende Materialien zeichnen sich dadurch aus, dass sie ab einer bestimmten Temperatur, welche in der Regel zwischen 200 und 350 °C liegt, beginnen zu expandieren. Durch die Expansion vergrößert sich das Volumen der intumeszierenden Materialien um ein Vielfaches, wobei eventuell vorhandene Hohlräume, durch die Feuer oder Rauch treten könnte, abgedichtet werden. Weiterhin wird durch die Abdichtung verhindert, dass zusätzliche Luft an den Brandherd gelangt und so ein weiteres Ausdehnen des Brandherdes verhindert. Normalerweise haben solche intumeszierenden Materialien, anders als flammhemmend ausgerüstete Kunststoffteile, außerhalb eines Brandfalles keine Funktion. Im Brandfall allerdings übernehmen sie die wichtige Funktion Hohlräume, Spalten und Fugen, welche sich an den unterschiedlichsten Stellen eines Gebäudeabschnittes befinden können, abzudichten. Der größte Anteil von intumeszierenden Dichtungen wird als Dichtungsstreifen in den Gebäuden verarbeitet.

Die intumeszierenden Materialien des Standes der Technik lassen sich grundsätzlich in drei Klassen einteilen.

Zu der ersten Klasse gehören Materialien mit gebundenem Kristallwasser, wie beispielsweise Vermiculite und Alkalisilikate, die bei Hitzeeinwirkung durch abgespaltenes und verdampftes Kristallwasser aufgetrieben werden.

Zu der zweiten Klasse gehören Materialien, die im Brandfall verkohlen und/oder verglasen bzw. keramisieren. Zu den verkohlenden und damit ein Kohlenstoffgerüst bildenden Stoffen gehören Kohlenhydrate, wie z.B. Mono-, Dioder Polysacharide wie Zucker, Stärke, Cellulose, welche gegebenenfalls mit Salzen starker anorganischer Säuren wie z. B. Phosphorsäure oder Schwefelsäure und/oder den entsprechenden Polysäuren in einer Mischung zusammenwirken. Materialien, welche im Brandfall verglasen bzw. keramisieren, sind Alkalisilikate, Alkalialumosilikate, Alkalimagnesiumsilikate, Phosphate, phosphathaltige Silikate bzw. Aluminate oder anorganische Borverbindungen und Gemische derselben.

Die dritte Klasse von intumeszierenden Dichtungsmaterialien enthält Blähgraphit, der durch chemische Behandlung von Graphit hergestellt wird. Hierbei wird Graphit mit Substanzen behandelt, meistens starke Säuren und/oder Oxidationsmittel, wie Wasserstoffperoxid oder Kaliumpermanganat, wobei die Säuren und/oder Oxidationsmittel in die Gitterstruktur des Graphits eingelagert werden. Durch diese Einlagerung in die Graphitstruktur werden die Schichtabstände der Graphitschichten aufgeweitet. Unter Hitzeinwirkung wird sich im Brandfall ein so vorbehandelter Graphit unter großer Volumenzunahme ausdehnen.

Die auf einem thermoplastischen Trägermaterial basierenden intumeszierenden Dichtungen des Standes der Technik werden oft auf der Grundlage von weichgemachtem PVC hergestellt. PVC hat den Nachteil, dass im Brandfall das sehr korrosive Gas HCl entsteht. Der hohe Anteil an Weichmacher in dem PVC wirkt sich nachteilig aus. Durch Migration des Weichmachers in dem PVC verliert eine Dichtung durch Alterung an Flexibilität. Die abdichtende Wirkung im Brandfall wird deshalb nachteilig beeinflusst. Des weiteren kann der Weichmacher mit anderen Materialien in der Umgebung der Dichtung in Kontakt bzw. in Wechselwirkung treten und diese nachteilig beeinflussen.

Weitere im Stand der Technik bekannte Polymere zur Herstellung von intumeszierenden Dichtungen sind Ethylen-Vinylacetat-Copolymere mit einem Vinylacetat-Anteil von 50 Gew.-%. Durch den hohen Vinylacetat-Anteil sind hohe Verarbeitungstemperaturen zur Herstellung der Dichtung notwendig. Falls in solchen Dichtungen Weichmacher eingesetzt werden ist die Alterungsstabilität vergleichbar mit Dichtungen auf Basis von weichgemachtem PVC. Die abdichtende Wirkung im Brandfall wird durch die Alterung nachteilig beeinflusst.

In der EP 0 879 870 werden intumeszierende Dichtungs- und Abdeckprofile offenbart. Die Profile werden durch Extrusion einer Mischung aus thermoplastischen Elastomeren, Blähgraphit, Flammhemmer, anorganischen Füllstoffen und anorganischen Fasern bei 180 - 250 °C und anschließender Umformung zu den entsprechenden Profilen hergestellt. Im Beispiel 1 der europäischen Offenlegungsschrift wird eine Mischung aus 50 Gew.-% EVA Levapren® 500 HV, 25 Gew.-% Blähgraphit, 5 Gew.-% Amgard V 490, 5 Gew.-% Glasfasern und 15 Gew.-% Aluminiumtrihydrat bei 180 - 210 °C in einem Zweischneckenextruder zu Strängen verarbeitet und kalt abgeschlagen. Anschließend wird das erhaltene Zylindergranulat mit einer Spritzgussmaschine zu Dichtungsprofilen umgeformt. Das EVA Copolymer Levapren® 500 HV wird von der Firma Bayer vertrieben. Es handelt sich hierbei um ein Ethylen-Vinylacetat-Copolymer mit einem Vinylacetat-Anteil von 50 Gew.-%. Da in dem ersten Produktionsschritt in dem Zweischnekken-Extruder 180 - 210 °C vorliegen, ist es notwendig, dass sich der Blähgraphit bei dieser Verarbeitungstemperatur nicht beginnt auszudehnen. Somit muss eine Blähgraphit-Type mit einer hohen Ausdehnungstemperatur verwendet werden, was dann zu einer hohen Ansprechtemperatur der hergestellten Dichtungsprofile im Brandfall führt. Die Dichtungsprofile beginnen sich erst bei relativ hohen Temperaturen im Brandfalle auszudehnen. Dies bewirkt, dass bei einem beginnenden Brand anfänglich Feuer und Rauch durch die mit den Dichtungsprofilen versehenen Hohlräume dringen kann, da anfänglich die Rauchtemperaturen so niedrig sind, dass die Dichtung sich nicht beginnt auszudehnen und somit die Hohlräume nicht versiegelt.

In der EP 1 207 183 wird eine Formmasse zur Herstellung von aufschäumenden Brandschutzformteilen offenbart. In einer bevorzugten Ausführungsform können aus der Formmasse Dichtungen hergestellt werden. Die vorgeschlagene Formmasse enthält ein Polymer ausgewählt aus thermoplastischem Elastomer oder thermoplastischem Ethylen-Vinylacetat-Copolymer, ein phosphorhaltiges Flammschutzmittel, sowie Blähgraphit. Falls als thermoplastisches Polymer ein Ethylen-Vinylacetat-Copolymer verwendet wird, so liegt der Vinylacetat-Anteil zwischen 5 und 95 Gew.-%, wobei ein Vinylacetat-Anteil von 50 Gew-% bevorzugt ist.

Die technische Aufgabe der vorliegenden Erfindung ist, eine intumeszierende Dichtung für den vorbeugenden Brandschutz bereitzustellen, die die Nachteile des Standes der Technik überwindet. Insbesondere soll die intumeszierende Dichtung bei möglichst niedrigen Temperaturen beginnen sich auszudehnen um im Brandfall ein schnelleres Ansprechverhalten und somit eine frühere Abdichtung von Hohlräumen in Gebäuden sicherzustellen.

Die technische Aufgabe der vorliegenden Erfindung wird gelöst durch eine intumeszierende Dichtung, enthaltend mindestens ein Ethylen-Vinylacetat-Copolymer mit einem Vinylacetat-Anteil von 6 - 40 Gew.-%, mindestens ein phosphorhaltiges Flammschutzmittel und Blähgraphit.

In einer bevorzugten Ausführungsform sind in der intumeszierenden Dichtung 20 - 80 Gew.-% des Ethylen-Vinylacetat-Copolymers enthalten. Vorzugsweise sind 20 - 50 Gew.-% und weiter bevorzugt 30 - 40 Gew.-% des Ethylen-Vinylacetat-Copolymers in der Dichtung enthalten.

Der Vinylacetat-Anteil in dem Ethylen-Vinylacetat-Copolymeren ist vorzugsweise 10 - 35 Gew.-%, weiter bevorzugt 12 - 30 Gew.% und am meisten bevorzugt 15 - 25 Gew.-%.

Da in der intumeszierenden Dichtung der vorliegenden Erfindung vorteilhafterweise kein PVC enthalten ist, entwickelt sich im Brandfall kein HCl-Gas. In der Dichtung der vorliegenden Erfindung sind vorzugsweise keine Weichmacher enthalten. Die Dichtung zeigt keine oder keine signifikante Alterung.

In einer weiteren bevorzugten Ausführungsform hat das in der intumeszierenden Dichtung verwendete Ethylen-Vinylacetat-Copolymer einen Erweichungspunkt von niedriger als 170 °C. Der Erweichungspunkt (Erweichungstemperatur) des Ethylen-Vinylacetat-Copolymer ist die Temperatur, bei der das Copolymer von einem glasigen oder hartelastischen Zustand in einen gummielastischen Zustand übergeht. Dieser Übergang ist verbunden mit einer Verminderung der Härte des Copolymeren. Dies zeigt sich dadurch, dass bei Erwärmung ein auf das zu untersuchende Copolymer aufgesetzter Körper nach Erreichen des Erweichungspunktes des Copolymeren, in das Copolymer eindringt.

Der Erweichungspunkt lässt sich nach DIN 53460, Dezember 1976, bestimmen. Nach dieser Norm wird die Temperatur ermittelt, bei der ein Stahlstift mit einem kreisförmigen Querschnitt von 1 mm² und einer Länge von mindestens 3 mm unter Aufbringung einer Kraft von 1 kp bzw. 5 kp 1 mm tief senkrecht in das Polymer eindringt.

Das in der intumeszierenden Dichtung der vorliegenden Erfindung verwendete Ethylen-Vinylacetat-Copolymer hat vorzugsweise einen Erweichungspunkt von niedriger als 150 °C, weiter bevorzugt niedriger als 130 °C, weiter bevorzugt niedriger als 110 °C, noch weiter bevorzugt niedriger als 90 °C, vorzugsweise niedriger als 70 °C und am meisten bevorzugt niedriger als 65 °C.

In der intumeszierenden Dichtung der vorliegenden Erfindung sind vorzugsweise 5 - 70 Gew.-% des phosphorhaltigen Flammschutzmittels enthalten. In einer weiteren bevorzugten Ausführungsform sind 5 - 50 Gew.-% und weiter bevorzugt 10 - 40 Gew.-% des phosphorhaltigen Flammschutzmittels in der Dichtung enthalten. Das phosphorhaltige Flammschutzmittel kann vorzugsweise ausgewählt werden aus der Gruppe bestehend aus organischem Phosphat, roter Phosphor, Ammoniumpolyphosphat, Ammoniumphosphat, Ammoniumdihydrogenphosphat und Mischungen derselben.

In der intumeszierenden Dichtung sind vorzugsweise 2 - 80 Gew.-%, weiter bevorzugt 10 - 60 Gew-%, noch weiter bevorzugt 20 - 50 Gew.-% und am meisten bevorzugt 25 - 40 Gew.-% des Blähgraphits enthalten. Der Blähgraphit, der in der Dichtung vorhanden ist, zeichnet sich dadurch aus, dass er vorzugsweise ab einer Temperatur von 120 - 250 °C beginnt sich auszudehnen. Die Ausdehnungstemperatur ist vorzugsweise 120 °C - 250 °C und weiter bevorzugt 120 °C - 150 °C.

Vorzugsweise haben 80 % der Teilchen des Blähgraphits eine Teilchengröße von 75 - 600 micron, weiter bevorzugt 150 - 600 micron und am meisten bevorzugt 180 - 600 micron.

In einer weiteren bevorzugten Ausführungsform ist der Blähgraphit ein Gemisch aus mindestens zwei Sorten Blähgraphit mit unterschiedlichen Eigenschaften. Vorzugsweise ist der Blähgraphit ein Gemisch aus Blähgraphit I und Blähgraphit II, wobei sich der Blähgraphit I ab einer Temperatur von 200 °C und der Blähgraphit II ab einer Temperatur von 140 °C beginnt auszudehnen.

Die intumeszierende Dichtung der vorliegenden Erfindung hat vorzugsweise die Form eines Streifens (Streifendichtung, Dichtungsstreifen) oder einer Platte.

In einer weiteren bevorzugten Ausführungsform hat der Blähgraphit bei einer Temperatur von 1000 °C eine Expansion von 20 - 400 ml/g, besonders bevorzugt 200 - 400 ml/g.

Vorzugsweise enthält die Dichtung 30 - 40 Gew.-% eines Ethylen-Vinylacetat-Copolymeren mit einem Vinylacetat-Anteil von 6 - 40 Gew.-%, 25 - 35 Gew.-% Blähgraphit, wobei der Blähgraphit bei einer Temperatur von 120 - 250 °C beginnt sich auszudehnen. In einer weiteren bevorzugten Ausführungsform enthält die Dichtung 35 Gew.-% eines Ethylen-Vinylacetat-Copolymeren mit einem Vinylacetat-Anteil von 6 - 40 Gew.-%, 30 % Ammoniumpolyphosphat und 35 Gew.-% Blähgraphit mit einer Ausdehnungstemperatur von 140 °C.

Die intumeszierende Dichtung der vorliegenden Erfindung weist bei einer Temperatur von 450 °C vorzugsweise eine freie Ausdehnung von mindestens dem 10- bis 25-fachen der Ausgangsstärke auf. In einer bevorzugten Ausführungsform besitzt die Dichtung bei einer Temperatur von 300 °C einen Expansionsdruck von 0,3 bis 1,1 N/mm².

Die erfindungsgemäße Dichtung weist hervorragende mechanische Eigenschaften, wie hohe Zug- und Biegefestigkeit auf. Demgegenüber sind die Dichtungen des Standes der Technik auf der Basis von Polyethylen sehr steif und weisen folglich nicht die gewünschte Flexibilität auf. Eine Dichtung aus weichgemachtem PVC als Trägermaterial besitzt verglichen mit den Dichtungen der vorliegenden Erfindung auch keine so guten mechanischen Eigenschaften. Des weiteren zeigt die erfindungsgemäße Dichtung im Gegensatz zu PVC-basierten Dichtungen im Brandfall keine Schrumpfung vor Beginn der Expansion. Da in der Dichtung der vorliegenden Erfindung vorzugsweise kein Weichmacher enthalten ist, tritt keine oder keine signifikante Alterung der Dichtung auf. Des weiteren können somit in der Umgebung der Dichtung liegende Materialien nicht nachteilig durch aus der Dichtung migrierenden Weichmacher beeinflusst werden.

Die erfindungsgemäße Dichtung expandiert im Brandfall rasch und bildet einen stabilen, hitzeisolierenden Kohlenstoffschaum. Die erfindungsgemäße Dichtung ist frei von Fasern und Halogenen und ist daher umweltfreundlich und gesundheitlich unbedenklich. Im Brandfall entstehen keine korrosiven Gase wie z.B. HCl.

Das Verfahren zur Herstellung der intumeszierenden Dichtung der vorliegenden Erfindung umfasst die folgenden Schritte:
a) Zudosieren eines Ethylen-Vinylacetat-Copolymers mit einem Vinylacetat-Anteil von 6 - 40 Gew.-% in einen Extruder,
b) Aufschmelzen des Ethylen-Vinylacetat-Copolymers
c) Zudosieren eines Gemisches enthaltend Blähgraphit und phosphorhaltiges Flammschutzmittel und
d) direkte Extrusion der durch das Polymer gebundenen Brandschutzmasse durch eine Düse.

Der Extruder des Schrittes a) ist vorzugsweise ein Doppelschnecken-Compoundier-Extruder, der weiter bevorzugt ein gleichlaufender Doppelschnekken-Compoundier-Extruder ist.

Falls die intumeszierende Dichtung die Form eines Streifens aufweist, kann vorteilhafterweise in Schritt d) eine Breitschlitzdüse verwendet werden.

Die Verarbeitungstemperatur in dem Extruder ist vorzugsweise 100 bis 200 °C, weiter bevorzugt 110 - 180 °C und am meisten bevorzugt 120 - 160 °C.

In einem weiteren bevorzugten Verfahren wird die Verarbeitungstemperatur so gewählt, dass diese etwa 5 - 10 °C niedriger ist als die Temperatur, bei der der Blähgraphit beginnt sich auszudehnen. Demgemäß kann das verwendete Ethylen-Vinylacetat-Copolymer so gewählt werden, dass das Polymer bei der gewünschten Verarbeitungstemperatur gut verarbeitbar ist.

In einer bevorzugten Ausführungsform wird in Schritt a) ein Ethylen-Vinylacetat-Copolymer mit einem Vinylacetat-Anteil von 6 bis 30 Gew.-% verwendet. Evatane® von der Firma Atofina wird als Ethylen-Vinylacetat-Copolymer bevorzugt eingesetzt. Ein Blähgraphit mit einem Expansionsbeginn von 140 °C und ein phosphorhaltiges Flammschutzmittel werden nachfolgend in Schritt c) in den Extruder zudosiert. Die Verarbeitungstemperatur des Extruders wird auf eine Temperatur zwischen 120 und 125 °C eingestellt und ein flexibles Band wird extrudiert. Dieses flexible Band kann aufgewickelt werden und/oder nachfolgend vollflächig oder teilflächig mit einem selbstklebenden Band und/oder Hart-PVC bzw einer Aluminiumfolie auf einer oder mehreren Seiten kaschiert werden. Üblicherweise wird die intumeszierende Dichtung in Form von Rollen oder Streifen angeboten und verarbeitet.

Die intumeszierende Dichtung kann zur Abdichtung von Fugen und/oder Hohlräumen verwendet werden. Die Fugen und/oder Hohlräume sind vorzugsweise in Gebäuden lokalisiert, insbesondere im Fenster- und Türbereich, zwischen Wänden und/oder Decken, in der Elektroinstallation, in Wand- und Dekkendurchbrüchen für Versorgungsrohre und/oder Kanälen für Kabel,

Die intumeszierenden Dichtungen der vorliegenden Erfindung haben ein vorteilhaftes Eigenschaftsprofil für den vorbeugenden Brandschutz. Es können Dichtungen bereitgestellt werden, die z.B. ab einer Temperatur von 130 °C oder einer niedrigeren Temperatur beginnen sich auszudehnen. Sie weisen im Brandfall ein schnelleres Ansprechverhalten als die Dichtungen des Standes der Technik auf. Die Dichtungen der vorliegenden Erfindung weisen bei einer Temperatur von 200°C vorzugsweise eine Ausdehnung um das achtfache der Ausgangsstärke auf, während die Dichtungen des Standes der Technik bei dieser Temperatur noch nicht begonnen haben sich auszudehnen. Dies ist insbesondere vorteilhaft für die Anwendung in Brandschutzverglasungen und Brandschutztüren, da der Falzraum oder der Türspalt im Brandfall sehr schnell durch den Kohlenstoffschaum der intumeszierenden Dichtung der vorliegenden Erfindung ausgefüllt und zuverlässig abgedichtet wird. Der Kohlenstoffschaum der Dichtung der vorliegenden Erfindung nach Intumeszens ist des weiteren verglichen mit den Dichtungen des Standes der Technik mechanisch stabiler gegenüber Löschwasser, welches oft unter hohem Druck zum Löschen von z.B. Gebäuden eingesetzt wird. Somit wird auch während der Löschung eine sichere Abdichtung der Hohlräume durch die Dichtung der vorliegenden Erfindung garantiert.

## Patentansprüche

1. Intumeszierende Dichtung enthaltend mindestens ein Ethylen-Vinylacetat-Copolymer mit einem Vinylacetat-Anteil von 6 bis 40 Gew.-%, mindestens ein phosphorhaltiges Flammschutzmittel und Blähgraphit.

2. Intumeszierende Dichtung nach Anspruch 1, **dadurch gekennzeichnet, dass** 20 bis 80 Gew.-% des Ethylen-Vinylacetat-Copolymers in der Dichtung enthalten sind.

3. Intumeszierende Dichtung nach Anspruch 1 oder 2, **dadurch gekennzeichnet, dass** der Vinylacetat-Anteil des Ethylen-Vinylacetat-Copolymers 10 bis 35 Gew.-% ist.

4. Intumeszierende Dichtung nach mindestens einem der vorhergehenden Ansprüche, **dadurch gekennzeichnet, dass** der Erweichungspunkt des Ethylen-Vinylacetat-Copolymers niedriger als 170 °C ist.

5. Intumeszierende Dichtung nach mindestens einem der vorhergehenden Ansprüche, **dadurch gekennzeichnet, dass** 5 bis 70 Gew.-% des phosphorhaltigen Flammschutzmittels in der Dichtung enthalten sind.

6. Intumeszierende Dichtung nach mindestens einem der vorhergehenden Ansprüche, **dadurch gekennzeichnet, dass** das phosphorhaltige Flammschutzmittel ausgewählt wird aus der Gruppe bestehend aus organischem Phosphat, roter Phosphor, Ammoniumpolyphosphat, Ammoniumphosphat, Ammoniumdihydrogenphosphat und Mischungen derselben.

7. Intumeszierende Dichtung nach mindestens einem der vorhergehenden Ansprüche, **dadurch gekennzeichnet, dass** 2 bis 80 Gew.-% Blähgraphit in der Dichtung enthalten ist.

8. Intumeszierende Dichtung nach mindestens einem der vorhergehenden Ansprüche, **dadurch gekennzeichnet, dass** der Blähgraphit sich ab einer Temperatur von 120 °C bis 250 °C beginnt auszudehnen.

9. Intumeszierende Dichtung nach mindestens einem der vorhergehenden Ansprüche, **dadurch gekennzeichnet, dass** 80% der Teilchen des Blähgraphits eine Teilchengröße von 75 bis 600 micron aufweisen.

10. Intumeszierende Dichtung nach mindestens einem der vorhergehenden Ansprüche, **dadurch gekennzeichnet, dass** der Blähgraphit ein Gemisch aus mindestens zwei Sorten Blähgraphit mit unterschiedlichen Eigenschaften ist.

11. Intumeszierende Dichtung nach Anspruch 11, **dadurch gekennzeichnet, dass** der Blähgraphit ein Gemisch aus Blähgraphit I und Blähgraphit II ist, wobei sich der Blähgraphit I ab einer Temperatur von 200 °C und der Blähgraphit II ab einer Temperatur von 140 °C beginnt auszudehnen.

12. Intumeszierende Dichtung nach mindestens einem der vorhergehenden Ansprüche, **dadurch gekennzeichnet, dass** die Dichtung die Form eines Streifens und/oder einer Platte aufweist.

13. Verfahren zur Herstellung einer intumeszierenden Dichtung, umfassend die Schritte:
a) Zudosieren eines Ethylen-Vinylacetat-Copolymers mit einem Vinylacetat-Anteil von 6 bis 40 Gew.-% in einen Extruder,
b) Aufschmelzen des Ethylen-Vinylacetat-Copolymers,
c) Zudosieren eines Gemisches enthaltend Blähgraphit und phosphorhaltiges Flammschutzmittel, und
d) Direkte Extrusion der durch das Polymer gebundenen Brandschutzmasse durch eine Düse.

14. Das Verfahren nach Anspruch 13, **dadurch gekennzeichnet, dass** der Extruder des Schrittes a) ein Doppelschnecken-Compoundierextruder ist, der vorzugsweise ein gleichlaufender Doppelschnecken-Compoundierextruder ist.

15. Das Verfahren nach Anspruch 13, **dadurch gekennzeichnet, dass** in Schritt d) eine Breitschlitzdüse verwendet wird.

16. Das Verfahren nach mindestens einem der Ansprüche 13 bis 15, **dadurch gekennzeichnet, dass** die Verarbeitungstemperatur 100 °C bis 200 °C ist.

17. Verwendung der intumeszierenden Dichtung nach mindestens einem der Ansprüche 1 bis 12 zur Abdichtung von Fugen und/oder Hohlräumen.

18. Verwendung der intumeszierenden Dichtung nach Anspruch 17, **dadurch gekennzeichnet, dass** die Fugen und/oder Hohlräume in Gebäuden lokalisiert sind, insbesondere im Fenster- und Türbereich, zwischen Wänden und/oder Decken, in der Elektroinstallation, in Wand- und/oder Deckendurchbrüchen für Versorgungsrohre und/oder Kanälen für Kabel.
